# EUROPEAN PATENT APPLICATION

(11) **EP 4 253 042 A1**
(43) Date of publication of application: **04.10.2023**
(21) Application number: 21897628.0
(22) Date of filing: 29.10.2021
(51) Int. Cl.: B32B 17/10

(54) **MULTI-LAYER STRUCTURE**

(30) Priority: 27.11.2020 JP 2020196632
(71) Applicant: Nitto Denko Corporation, Ibaraki-shi, Osaka 567-8680 (JP)
(72) Inventor: INAGAKI, Junichi, Ibaraki-shi, Osaka 567-8680 (JP); SATO, Keisuke, Ibaraki-shi, Osaka 567-8680 (JP); MURASHIGE, Takeshi, Ibaraki-shi, Osaka 567-8680 (JP)
(74) Representative: Hoffmann Eitle
(86) International application number: PCT/JP2021/040086
(87) International publication number: WO 2022/113652

(57) **Abstract**

A multi-layer structure includes a support, a resin layer laminated on the support via a tackifier layer, and a glass layer laminated over the resin layer. The thickness of the glass layer is 10 um or greater and 300 um or less. When the coefficient of linear expansion of the support is defined as CTE [ppm/°C], the thickness of the tackifier layer is defined as d [pm], and the elastic modulus of the tackifier layer is defined as E [GPa], a value a, which is defined as a=CTE/(d/E), is 3 or less.

## Description

### Technical Field

The present invention relates to a multi-layer structure.

### Background Art

Multi-layered structures in which two or more layers are laminated have been known. In an example multi-layered structure, a silver reflection layer is laminated on a glass layer (glass film) having a small plate thickness. The thickness of this multi-layer structure is in the range of, for example, from 10 um through 200 um. This multi-layer structure is obtained from a glass roll formed by a downdraw method.

### Citation List

### Patent Document

Patent Document 1: Japanese Unexamined Patent Application Publication No. 2013-231744

### Summary of Invention

### Problem to be Solved by Invention

Because of being extremely fragile, such a glass layer as described above that has a small plate thickness is easily cracked and has poor handleability. Therefore, for example, a proposed multi-layer structure is improved in handleability by reinforcement of the glass layer with, for example, a resin layer pasted on one side of the glass layer.

However, when the multi-layer structure is used repeatedly in a high-temperature environment or a high-temperature, high-humidity environment, there have been cases where the glass layer is cracked.

The present invention is made in view of the respect described above, and an object of the present invention is to provide a multi-layer structure in which a glass layer is not easily cracked.

### Means for Solving Problem

A multi-layer structure according to an embodiment includes a support, a resin layer laminated on the support via a tackifier layer, and a glass layer laminated over the resin layer. The thickness of the glass layer is 10 um or greater and 300 um or less. When the coefficient of linear expansion of the support is defined as CTE [ppm/°C], the thickness of the tackifier layer is defined as d [pm], and the elastic modulus of the tackifier layer is defined as E [GPa], the value a, which is defined as a=CTE/(d/E), is 3 or less.

### Advantageous Effects of Invention

According to the disclosed technique, it is possible to provide a multi-layer structure in which a glass layer is not easily cracked.

### Brief Description of Drawings

[FIG. 1] FIG. 1 is a cross-sectional view illustrating a multi-layer structure according to an embodiment.
[FIG. 2] FIG. 2 is a graph plotting a relationship between thickness/elastic modulus of a tackifier layer and a coefficient of linear expansion of a support.
[FIG. 3] FIG. 3 is a diagram illustrating conditions and results of Examples and Comparative Example.

### Description of Embodiments

An embodiment for carrying out the invention will be described below with reference to the drawings. The same components in the diagrams will be denoted by the same reference numerals, and overlapping descriptions about such components may be skipped.

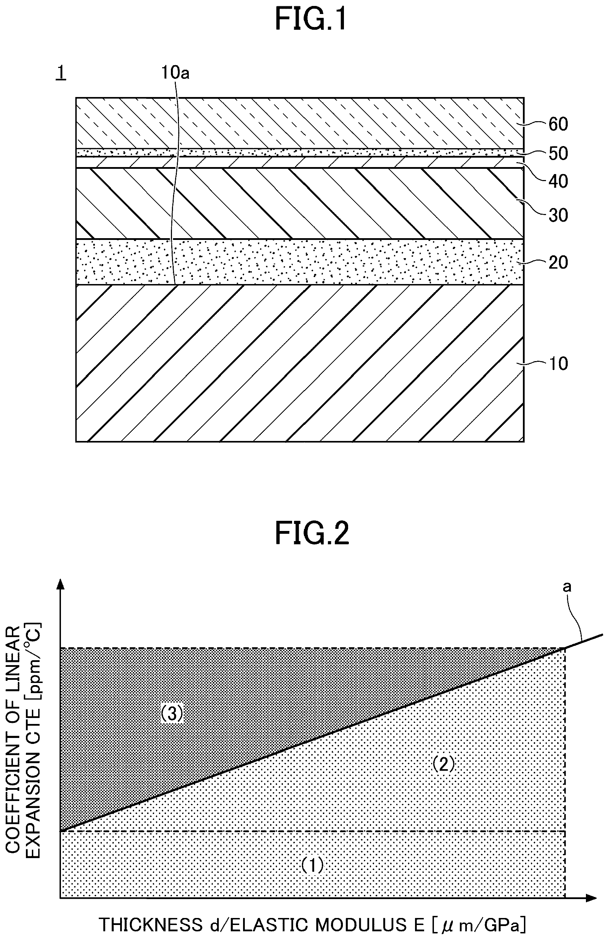

FIG. 1 is a cross-sectional view illustrating a multi-layer structure according to an embodiment. As illustrated in FIG. 1, the multi-layer structure 1 includes a support 10, a tackifier layer 20, a resin layer 30, a metal layer 40, an adhesive layer 50, and a glass layer 60. The tackifier layer 20, the resin layer 30, the metal layer 40, the adhesive layer 50, and the glass layer 60 are laminated in this order on an upper surface 10a of the support 10.

The planar shape of the multi-layer structure 1 (i.e., a shape seen in a direction of the normal to the upper surface 10a of the support 10) is, for example, a rectangular shape. However, the planar shape of the multi-layer structure 1 is not limited to this, and may be a circular shape, an elliptical shape, any combinations of these shapes, and other appropriate shapes.

The multi-layer structure 1 can be used as, for example, a mirror. In the multi-layer structure 1, the thickness of the glass layer 60 is 10 um or greater and 300 um or less. In the multi-layer structure 1, the glass layer 60 is thin, and the surface of the glass layer 60 and the metal layer 40 are extremely close to each other. Therefore, the multi-layer structure 1 can reflect a clear image by solving the problem of existing sheet glass, i.e., an image being reflected doubly.

Here, the material and other particulars of each component of the multi-layer structure 1 will be described.

### [Support]

The support 10 supports the resin layer 30 and the glass layer 60. The thickness of the support 10 may be, for example, approximately 1 mm or greater and 5 mm or less. The coefficient of linear expansion of the support 10 is preferably 100 ppm/°C or lower. Examples of the material of the support 10 include resins, glass, and metals. It is preferable that the coefficient of linear expansion of the support 10 be less. In this respect, it is preferable to use glass and metals as the material of the support 10.

Meanwhile, in terms of improving handleability of the multi-layer structure 1, it is preferable to form the support 10 using a lightweight material. In this case, the weight of the support 10 per unit area is preferably 8 kg/m² or less. In this case, it is possible to form the support 10 using a resin material, and it is preferable to select a resin material having a low coefficient of linear expansion. Examples of the resin material having a low coefficient of linear expansion include low-shrinkage acrylic-based resins produced by a melting film-formation method without stretching, and low-shrinkage polycarbonate-based resins produced by a stretching method.

### [Tackifier layer]

The tackifier layer 20 is provided between the support 10 and the resin layer 30. As the tackifier layer 20, a desirably selected appropriate tackifier is used. Examples of the material of the tackifier layer 20 include acrylic-based tackifiers, silicone-based tackifiers, and rubber-based tackifiers. The thickness of the tackifier layer 20 is not particularly limited, and is, for example, approximately 5 um or greater and 500 um or less.

### [Resin layer]

The resin layer 30 is laminated on the support 10 via the tackifier layer 20. The resin layer 30 is formed of one layer or a plurality of layers. When the resin layer 30 is formed of a plurality of layers, it is preferable that the plurality of layers be laminated via a closely adhesive layer having an adhesive function. The total thickness of the resin layer 30 needs to at least be 20 um or greater and 1,000 µm or less, and preferably 25 µm or greater and 500 µm or less, and more preferably 50 um or greater and 200 um or less in terms of flexibility. When the resin layer 30 is formed of one layer, the thickness of the resin layer 30 may be in the range of, for example, 20 µm or greater and 150 µm or less.

Examples of the material of the resin layer 30 include polyester-based resins such as polyethylene terephthalate-based resins and polyethylene naphthalate-based resins, cycloolefin-based resins such as norbornene-based resins, polyether sulfone-based resins, polycarbonate-based resins, acrylic-based resins, polyolefin-based resins, polyimide-based resins, polyamide-based resins, polyimide amide-based resins, polyarylate-based resins, polysulfone-based resins, polyether imide-based resins, cellulose-based resins, and urethane-based resins.

### [Metal layer]

The metal layer 40 is laminated on the resin layer 30. The metal layer 40 is a layer that reflects visible light incident thereto through the glass layer 60 and the adhesive layer 50. As the material of the metal layer 40, a material having a high visible light reflectance is preferable. Examples of such a material include aluminum, silver, and silver alloys. The thickness of the metal layer 40 is not particularly limited, and is, for example, approximately 10 nm or greater and 500 nm or less. It is possible to form the metal layer 40 on the upper surface of the resin layer 30 by, for example, a sputtering method, a vapor deposition method, and a plating method.

The metal layer 40 may be formed on the lower surface of the glass layer 60. In such a case, the tackifier layer 20, the resin layer 30, the adhesive layer 50, the metal layer 40, and the glass layer 60 are laminated in this order on the upper surface 10a of the support 10. It is possible to form the metal layer 40 on the lower surface of the glass layer 60 by, for example, a sputtering method, a vapor deposition method, and a plating method.

However, it is only necessary to provide the metal layer 40 as the necessity arises. When the multi-layer structure 1 is free of the metal layer 40, the multi-layer structure 1 can be used as, for example, a lightweight glass board having texture and hardness of glass.

### [Adhesive layer]

The adhesive layer 50 is formed of a material having a high visible light transmittance. The thickness of the adhesive layer 50 is, for example, 0.1 um or greater and 25 um or less. As the adhesive layer 50, for example, acrylic-based tackifiers, silicone-based tackifiers, rubber-based tackifiers, ultraviolet-curable acrylic-based adhesives, ultraviolet-curable epoxy-based adhesives, thermosetting epoxy-based adhesives, thermosetting melamine-based adhesives, thermosetting phenol-based adhesives, ethylene vinyl acetate (EVA) interlayers, and polyvinyl butyral (PVB) interlayers can be used.

In the present specification, a tackifier represents a layer that has an adhesive property at normal temperature and adheres to an adhesion target at a low pressure. Hence, even when the adhesion target adhering to the tackifier is peeled, the tackifier has a practical tackifying force. On the other hand, an adhesive represents a layer that can bond substances by existing between the substances. Hence, when an adhesion target adhering to the adhesive is peeled, the adhesive does not have a practical adhesive force.

### [Glass layer]

The glass layer 60 is laminated on the metal layer 40 via the adhesive layer 50. The glass layer 60 is not particularly limited, and an appropriate material can be used in accordance with the intended purpose. Examples of the material of the glass layer 60 according to compositional classification include soda lime glass, borate glass, aluminosilicate glass, and quartz glass. Examples of the material of the glass layer 60 according to alkali component classification include alkali-free glass and low alkali glass. The content of an alkali metal component (e.g., Na₂O, K₂O, and Li₂O) in the glass is preferably 15% by weight or less and more preferably 10% by weight or less.

The thickness of the glass layer 60 is preferably 10 um or greater, considering surface hardness, airtightness, and corrosion resistance of glass. Moreover, because it is preferable that the glass layer 60 has such a flexibility as that of a film, the thickness of the glass layer 60 is preferably 300 um or less. The thickness of the glass layer 60 is more preferably 20 um or greater and 200 um or less, and particularly preferably 30 um or greater and 150 um or less.

The transmittance of light having a wavelength of 550 nm through the glass layer 60 is preferably 85% or higher. The index of refraction of a wavelength of 550 nm through the glass layer 60 is preferably from 1.4 through 1.65. The density of the glass layer 60 is preferably from 2.3 g/cm³ through 3.0 g/cm³, and more preferably from 2.3 g/cm³ through 2.7 g/cm³ .

The method for forming the glass layer 60 is not particularly limited, and an appropriate method may be employed in accordance with the intended purpose. Representatively, it is possible to produce the glass layer 60 by melting a mixture including a main material such as silica and alumina, a defoamer such as mirabilite and antimony oxide, and a reductant such as carbon at a temperature of approximately from 1,400°C through 1,600°C, forming the resulting product into a thin plate shape, and then cooling the resulting product. Examples of the method for forming the glass layer 60 include a slot downdraw method, a fusion method, and a float method. It is optional to chemically polish the glass layer, which has been formed into a sheet shape by any such method as described above, using a solvent such as hydrofluoric acid as needed, for formation into a sheet shape or improvement of smoothness.

Functional layers such as a stain-resistant layer, an antireflection layer, an electroconductive layer, a reflection layer, and a decorative layer may be provided on the upper surface of the glass layer 60 (i.e., the surface on which the adhesive layer 50 is not formed).

### [Handleability of multi-layer structure and cracks in glass layer]

When the glass layer 60 is thin, handleability is poor. Therefore, the glass layer 60 may be easily cracked. Hence, in the multi-layer structure 1, the support 10 is provided at the undermost layer, to improve handleability.

Glass may be used as the support 10. However, because glass is heavy, this increases the weight of the entirety of the multi-layer structure 1 and worsens handleability. Hence, when handleability is important, it is preferable to form the support 10 using a resin material.

However, in the case where a resin material is used as the support 10, the resin material thermally expands when the multi-layer structure 1 is used in a high-temperature environment (e.g., 80°C) or in a high-temperature, high-humidity environment (e.g., 60°C 95%). Hence, without any countermeasure, the glass layer 60 may be locally deformed and the glass layer 60 may be cracked due to thermal expansion of the resin material through repeated use of the multi-layer structure 1 in a high-temperature environment or in a high-temperature, high-humidity environment.

Hence, a countermeasure is taken in the multi-layer structure 1, so that the glass layer 60 is not cracked even when a resin material is used as the support 10. This will be described below. Because the resin layer 30 is bonded to the glass layer 60 via the adhesive layer 50, the resin layer 30 exhibits substantially the same behaviors as those of the glass layer 60. Hence, thermal expansion of the resin layer 30 can be ignored in terms of cracks in the glass layer 60.

The present inventors have repeatedly conducted studies into an idea of relieving the effects of thermal expansion of the support 10 on the glass layer 60, by making the tackifier layer 20 absorb the thermal expansion of the support 10, and have discovered a relationship as plotted in FIG. 2. FIG. 2 is a graph plotting a relationship between thickness d [pm]/elastic modulus E [GPa] of the tackifier layer 20 and the coefficient of linear expansion CTE [ppm/°C] of the support 10.

In FIG. 2, followability of the tackifier layer 20 to thermal expansion of the support 10 is greater, the further the position on the horizontal axis representing thickness d [pm]/elastic modulus E [GPa] is in the direction of the arrow (rightward), and thermal expansion deformation of the support 10 is greater, the further the position on the vertical axis representing the coefficient of linear expansion CTE [ppm/°C] is in the direction of the arrow (upward).

The oblique line in FIG. 2 represents a = CTE [ppm/°C]/(thickness d [pm]/elastic modulus E [GPa]). In the regions (1) and (2) below the oblique line in FIG. 2, the glass layer 60 will not be cracked. On the other hand, in the region (3) above the oblique line in FIG. 2, the glass layer 60 will be cracked.

That is, when CTE [ppm/°C] of the support 10 is low, the glass layer 60 will not be cracked even when thickness d [pm]/elastic modulus E [GPa] of the tackifier layer 20 is low. Even when CTE [ppm/°C] of the support 10 is high, increasing thickness d [pm]/elastic modulus E [GPa] of the tackifier layer 20 can relieve thermal expansion of the support 10, so the glass layer 60 will not be cracked.

The region (1) represents a property obtained when glass is used as the support 10. The region (2) represents a property obtained when a resin material is used as the support 10. That is, when glass is used as the support 10, the glass layer 60 will not be cracked irrespective of whether thickness d [pm]/elastic modulus E [GPa] of the tackifier layer 20 is high or low. As compared with this, when a resin material is used as the support 10, by adjusting thickness d [pm]/elastic modulus E [GPa] of the tackifier layer 20 such that it has a value that is below the oblique line of FIG. 2 in view of the coefficient of linear expansion of the resin material, it is possible to inhibit cracks in the glass layer 60.

According to the present inventors' studies, it is possible to inhibit cracks in the glass layer 60 due to thermal expansion of the support 10, when a = CTE [ppm/°C]/(thickness d [pm]/elastic modulus E [GPa]) is 3 or less. When glass is used as the support 10, the value of a is approximately 0.3. When a resin material is used as the support 10, the value of a is 1 or greater.

Hence, when heaviness of the multi-layer structure 1 is tolerable to a certain degree, it is preferable to select the support 10 and the tackifier layer 20 such that the value of a becomes 0.2 or greater and 3 or less. On the other hand, in order to reduce the weight of the multi-layer structure 1, it is necessary to use a resin material as the support 10. In this case, it is preferable to select the support 10 and the tackifier layer 20 such that the value of a becomes 1 or greater and 3 or less. In any case, it is possible to inhibit cracks in the glass layer 60 so long as a≤3.

In terms of securely inhibiting cracks in the glass layer 60, the coefficient of linear expansion of the support 10 is preferably 5 [ppm/°C] ≤ CTE ≤ 100 [ppm/°C]. The thickness of the tackifier layer 20 is preferably d≥50 [um], preferably d≥100 [pm], and more preferably d≥150 [pm].

### [Example 1]

In Example 1, a multi-layer structure having the structure illustrated in FIG. 1 was produced, to look into handleability and occurrence of cracks in the glass layer. In the multi-layer structure produced in Example 1, OA-10G obtained from Nippon Electric Glass Co., Ltd. was used as the material of the glass layer, and the thickness of the glass layer was set to approximately 100 um. An acrylic-based resin was used as the material of the tackifier layer, and thickness and elastic modulus of the tackifier layer were set to approximately 100 um and approximately 3 [GPa] respectively. An acrylic-based resin was used as the material of the support, and the coefficient of linear expansion of the support was set to 70 ppm/°C. In this case, a=2.1 [GPa•ppm/°C•um].

### [Example 2]

In Example 2, a multi-layer structure having the structure illustrated in FIG. 1 was produced, to look into handleability and occurrence of cracks in the glass layer. In the multi-layer structure produced in Example 2, OA-10G obtained from Nippon Electric Glass Co., Ltd. was used as the material of the glass layer, and the thickness of the glass layer was set to approximately 100 um. An acrylic-based resin was used as the material of the tackifier layer, and thickness and elastic modulus of the tackifier layer were set to approximately 100 um and approximately 3 [GPa] respectively. Sheet glass was used as the material of the support, and the coefficient of linear expansion of the support was set to 9 ppm/°C. In this case, a=0.3 [GPa•ppm/°C•µm].

### [Example 3]

In Example 3, a multi-layer structure having the structure illustrated in FIG. 1 was produced, to look into handleability and occurrence of cracks in the glass layer. In the multi-layer structure produced in Example 3, OA-10G obtained from Nippon Electric Glass Co., Ltd. was used as the material of the glass layer, and the thickness of the glass layer was set to approximately 100 um. An acrylic-based resin was used as the material of the tackifier layer, and thickness and elastic modulus of the tackifier layer were set to approximately 150 um and approximately 3 [GPa] respectively. An acrylic-based resin was used as the material of the support, and the coefficient of linear expansion of the support was set to 70 ppm/°C. In this case, a=1.4 [GPa•ppm/°C•um].

### [Comparative Example 1]

In Comparative Example 1, a multi-layer structure having the structure illustrated in FIG. 1 was produced, to look into handleability and occurrence of cracks in the glass layer. In the multi-layer structure produced in Comparative Example 1, OA-10G obtained from Nippon Electric Glass Co., Ltd. was used as the material of the glass layer, and the thickness of the glass layer was set to approximately 100 um. An acrylic-based resin was used as the material of the tackifier layer, and thickness and elastic modulus of the tackifier layer were set to approximately 30 um and approximately 3 [GPa] respectively. An acrylic-based resin was used as the material of the support, and the coefficient of linear expansion of the support was set to 70 ppm/°C. In this case, a=7.0 [GPa•ppm/°C•um].

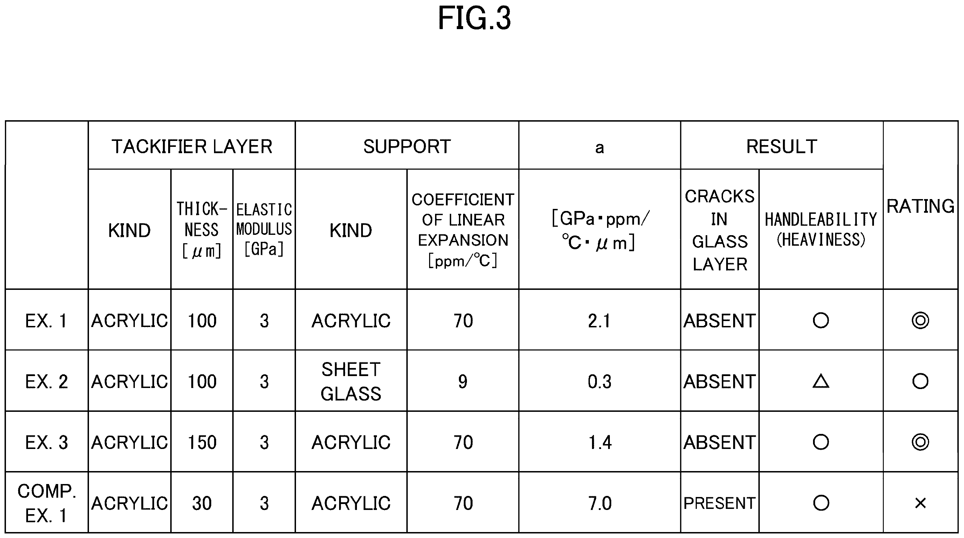

The conditions and results of Examples 1 to 3 and Comparative Example 1 are summarized in FIG. 3. In all of Examples 1 to 3 and Comparative Example 1, occurrence of cracks in the glass layer was checked after the multi-layer structures were left in an environment at a temperature of 60°C at a humidity of 95% for 12 hours.

From FIG. 3, it was successfully confirmed that the glass layer was not cracked when a≤3. For better improvement of handleability, it is appropriate to conclude that use of a resin material as the support is preferable.

Preferred embodiments and other particulars have been described in detail above. However, the embodiments and other particulars described above are not intended in a limiting sense, and various modifications and replacements can be made to the embodiments and other particulars described above without departing from the scope described in the claims.

This international application is based on and claims priority to Japanese Patent Application No. 2020-196632, filed November 27, 2020. The entire content of Japanese Patent Application No. 2020-196632 is incorporated herein by reference.

### Reference Signs List

1 multi-layer structure
10 support
10a upper surface
20 tackifier layer
30 resin layer
40 metal layer
50 adhesive layer
60 glass layer

## Claims

1. A multi-layer structure, comprising:
a support;
a resin layer laminated on the support via a tackifier layer; and
a glass layer laminated over the resin layer,
wherein a thickness of the glass layer is 10 um or greater and 300 um or less, and
when a coefficient of linear expansion of the support is defined as CTE [ppm/°C], thickness of the tackifier layer is defined as d [pm], and elastic modulus of the tackifier layer is defined as E [GPa], a value a, which is defined as a = CTE/(d/E), is 3 or less.

2. The multi-layer structure according to claim 1,
wherein the CTE is 100 ppm/°C or lower.

3. The multi-layer structure according to claim 1 or 2,
wherein the d is 50 um or greater.

4. The multi-layer structure according to any one of claims 1 to 3,
wherein a weight of the support per unit area is 8 kg/m² or less.

5. The multi-layer structure according to claim 4,
wherein the value of a is 1 or greater.

6. The multi-layer structure according to claim 5,
wherein the support is formed of a resin material.

7. The multi-layer structure according to claim 6,
wherein the resin material is an acrylic-based resin or a polycarbonate-based resin.

8. The multi-layer structure according to any one of claims 1 to 7, further comprising:
a metal layer laminated between the resin layer and the glass layer.
